# EUROPÄISCHE PATENTSCHRIFT

(11) **EP 2 921 440 B1**
(45) Veröffentlichungstag und Bekanntmachung des Hinweises auf die Patenterteilung: **31.08.2016**
(21) Anmeldenummer: 15158557.7
(22) Anmeldetag: 11.03.2015
(51) Int. Cl.: B65G 47/91, B65G 57/04

(54) **Vorrichtung zum Transportieren und Ablegen von Tafeln aus Metall, Kunststoff oder Pappe**
Device for transporting and placing panels made of metal, plastic or cardboard
Dispositif de transport et de dépôt de panneaux en métal, en plastique ou en carton

(30) Priorität: 18.03.2014 DE 102014204955
(43) Veröffentlichungstag der Anmeldung: 23.09.2015
(73) Patentinhaber: TEC TECHNOLOGY GMBH, 74366 Kirchheim am Neckar (DE)
(72) Erfinder: Klepser, Dieter, 74366 Kirchheim (DE)
(74) Vertreter: Wolf, Eckhard

(56) Entgegenhaltungen:
- EP-A1- 1 266 852
- DE-A1- 10 347 545
- DE-A1-102009 042 582

## Beschreibung

Die Erfindung betrifft eine Vorrichtung zum Transportieren und Ablegen von Tafeln aus Metall, Kunststoff oder Pappe, mit einer Tafelzuführstrecke, mit einer in Transportrichtung an die Tafelzuführstrecke anschließenden Stapeleinrichtung und mit einer oberhalb der Stapeleinrichtung angeordneten, eine von der Tafelzuführstrecke ankommende Tafel über Kopf übernehmenden und in einer Ablegeposition der Stapeleinrichtung ablegenden Übergabeeinrichtung, wobei die Übergabeeinrichtung einen Haltemechanismus aufweist, der die Tafel unter Ausübung einer über eine Steuereinrichtung einstellbaren, nach oben weisenden Haltekraft in Richtung Stapeleinrichtung führt und dort auf einem Stapel ablegt.

Es ist eine Vorrichtung dieser Art bekannt (DE-10 2009 042 582 A1), die eine Tafelzuführstrecke, eine in Transportrichtung an die Tafelzuführstrecke anschließende Stapeleinrichtung und eine oberhalb der Stapeleinrichtung angeordnete, eine ankommende Tafel übernehmende und in einer Ablegeposition der Stapeleinrichtung ablegende Übergabeeinrichtung aufweist. Die Übergabeeinrichtung weist dort mindestens einen Überkopfriemen auf, der die Tafel unter Ausübung einer über eine Steuereinrichtung einstellbaren Haltekraft in Richtung Stapeleinrichtung führt und dort auf einem Stapel ablegt. Der Überkopfriemen wird mit im Wesentlichen konstanter, der Einlaufgeschwindigkeit entsprechenden Umlaufgeschwindigkeit angetrieben. Im Bereich des perforierten Überkopfriemens ist eine die Haltekraft auf die Tafel ausübende Luftsteuereinheit angeordnet. Die Haltekraft wird vor Erreichen der Ablegeposition reduziert oder abgeschaltet. Außerdem wird die Tafel abgebremst, so dass sie mit gegenüber der Einlaufgeschwindigkeit reduzierter Restgeschwindigkeit im Bereich der Ablegeposition abgelegt wird. Die bekannte Konstruktion mit einem Überkopfförderband mit getakteter Vakuumstation ist relativ aufwändig. Da die zu transportierenden Tafeln kurz zuvor lackiert oder bedruckt worden sind, besteht außerdem die Gefahr, dass im Zuge des Transportvorgängs durch das Anpressen der Tafel gegen das Untertrum des Überkopfförderbandes eine Beschädigung der Lack- oder Druckschicht an der Tafeloberfläche auftritt.

Um die vorstehenden Nachteile zu vermeiden, ist es bei einer gattungsgemäßen Vorrichtung der eingangs genannten Art zusätzlich bekannt (DE-103 47 545 A1), dass die Übergabeeinrichtung eine sich in Transportrichtung mit nach unten weisender stationärer Führungsfläche über die Stapeleinrichtung erstreckende Führungsstrecke aufweist, in welcher unter Bildung des Haltemechanismus mehrere, einen Abstand voneinander aufweisende, jeweils im Bereich der Führungsfläche nach unten offene Luftdüsen angeordnet sind, die mit Druckluft beaufschlagbar und dazu geeignet sind, zwischen der Führungsfläche und der ankommenden Tafel ein von der Druckluft durchströmtes Luftpolster zu erzeugen. Dem strömenden Luftpolster kommt dabei die Doppelfunktion zu, dass unter Ausnutzung des Bernoulli-Effekts eine von unten nach oben weisenden Haltekraft an der Tafel angreift und eine unmittelbare Anlage der Tafeloberfläche gegen die Führungsfläche verhindert wird. Die Tafel wird also unter der Einwirkung des vom Zuführband kommenden Vorschubs in räumlicher Nähe zur Führungsfläche entlang der Führungsstrecke verschoben, bis sie in die Nähe der Ablegeposition oberhalb der Stapeleinrichtung gelangt.

Bei dünnwandigen Tafeln hat es sich gezeigt, dass die Tafel während des Transports entlang der Führungsstrecke zum Flattern neigt und keine ausreichende Eigenstabilität aufweist, die für die Aufrechterhaltung einer ausreichenden Haltekraft notwendig ist.

Ausgehend hiervon liegt der Erfindung die Aufgabe zugrunde, die Vorrichtung zum Transportieren und Ablegen von Tafeln der vorstehend angegebenen Art dahingehend weiterzubilden, dass entlang der Führungsstrecke stets eine ausreichende Haltekraft gewährleistet ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung besteht im Wesentlichen darin, dass die Führungsstrecke mindestens drei in seitlichem Abstand voneinander angeordnete, sich in Transportrichtung über die Stapeleinrichtung erstreckende Führungsschienen aufweist, in welchen jeweils mehrere in Längsrichtung einen Abstand voneinander aufweisende Luftdüsen angeordnet sind. Die äußeren Führungsschienen sind dabei entweder etwas höher oder etwas tiefer als die innere Führungsschiene angeordnet, so dass die Führungsschienen gemeinsam eine in Querrichtung gekrümmte Führungsfläche aufspannen, die zu einem Aufschüsseln der transportierten Tafel im Bereich der Führungsstrecke und damit zu einer Aussteifung der Tafel und zu einer Verbesserung des Transportverhaltens führen. Eine weitere Verbesserung in dieser Hinsicht wird dadurch erreicht, dass die Tafelzuführstrecke zumindest im Bereich ihres der Stapelvorrichtung zugewandten Endes eine quer zur Transportrichtung gekrümmte Führungsfläche zur Aufschüsselung der an die Übergabeeinrichtung zu übergebenden Tafel aufweist.

Die Luftdüsen sind im Bereich der Übergabeeinrichtung über Magnetventile einzeln oder gruppenweise unter der Einwirkung der Steuereinrichtung mit Druckluft beaufschlagbar.

Gemäß einer bevorzugten Ausgestaltung der Erfindung befindet sich im Bereich der Tafelzuführstrecke ein auf einen rückwärtigen Abschnitt der Tafel einwirkenden Bremsmechanismus, der die Vorschubgeschwindigkeit der Tafel kurz vor dem Ablegen abbremst. Außerdem ist ein auf eine Position der Tafel entlang ihres Transportwegs ansprechender Sensor vorgesehen, der mit der Steuerungseinrichtung zur Ansteuerung der Luftdüsen gekoppelt ist. Die Steuerungseinrichtung löst durch Abschaltung der Luftzufuhr zu den Luftdüsen den Ablegevorgang aus, bevor die Tafel die Ablegeposition erreicht hat. Im Bereich des in Transportrichtung rückwärtigen Endes der Stapeleinrichtung befindet sich unterhalb der Führungsstrecke ein mechanischer Anschlag für die Vorderkante der abzulegenden Tafeln, der federnd oder elatisch ausgebildet sein kann.

Vorteilhafterweise weist die Tafelzuführstrecke ein endlos umlaufendes Zuführband auf, dessen Umlaufgeschwindigkeit variabel ist und über welches die Tafel unter Ausübung einer über die Steuerungseinrichtung einstellbaren Haltekraft bei reduzierter Umlaufgeschwindigkeit auf eine Restgeschwindigkeit abbremsbar ist. Im Bereich des Zuführbandes befindet sich eine Unterdruckquelle oder Magnetquelle als Bremsmechanismus. Weiter befindet sich zweckmäßig im Bereich der Tafelzuführstrecke ein auf die Vorderkante oder die Rückkante der ankommenden Tafel ansprechender, mit der Steuerungseinrichtung verbundener Sensor, beispielsweise eine Lichtschranke.

Im Folgenden wird die Erfindung anhand eines in der Zeichnung in schematischer Weise dargestellten Ausführungsbeispiels näher erläutert. Es zeigen
- Fig. 1a bis: c Prinzipdarstellung einer Vorrichtung zum Transportieren und Stapeln von Tafeln in einer Seitenansicht, einer Draufsicht und einer Stirnseitenansicht;

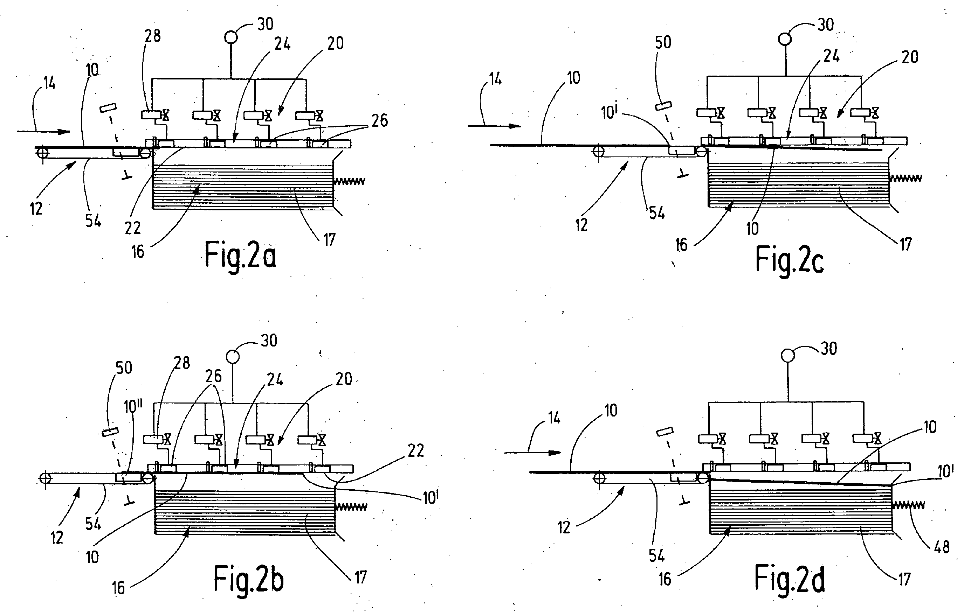

- Fig. 2a: bis d Seitenansichten der Vorrichtung entsprechend Fig. 1 a in verschiedenen Zuständen des Tafeltransports entlang der Zuführstrecke und der Übergabeeinrichtung;
- Fig. 3: einen Schnitt durch eine Luftdüse im Bereich der Übergabeeinrichtung während des Tafeltransports zur Erläuterung des erfindungsgemäß ausgenutzten Bernoulli-Effekts.

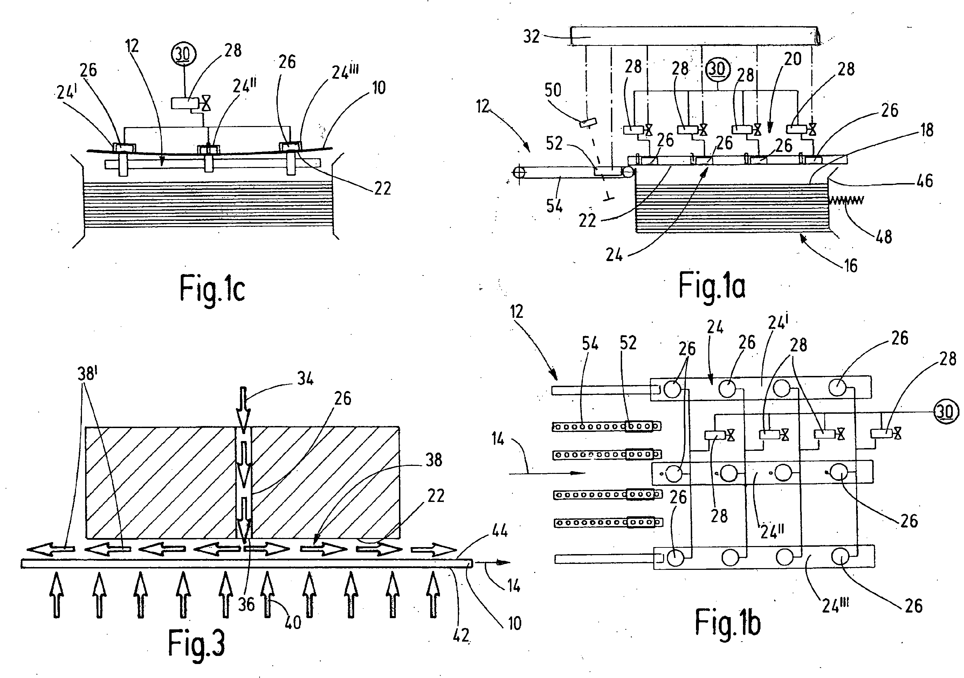

Die in der Zeichnung dargestellte Vorrichtung ist zum Transportieren und Stapeln von Tafeln 10, vorzugsweise aus Metallblech, die an ihrer Oberseite bedruckt oder lackiert sein können, bestimmt. Die Vorrichtung umfasst eine Tafelzuführstrecke 12, eine in Transportrichtung 14 an die Tafelzuführstrecke 12 anschließende Stapeleinrichtung 16 und eine oberhalb der Stapeleinrichtung 16 angeordnete, eine ankommende Tafel 10 übernehmende und in einer Ablegeposition 18 der Stapeleinrichtung 16 ablegende Übergabeeinrichtung 20. Die Übergabeeinrichtung 20 weist eine sich in Transportrichtung 14 mit nach unten weisender stationärer Führungsfläche 22 über die Stapeleinrichtung 16 erstreckende Führungsstrecke 24 mit einem Haltemechanismus für die Tafeln 10 auf. Wie insbesondere aus Fig. 1b zu ersehen ist, weist die Führungsstrecke 24 bei dem gezeigten Ausführungsbeispiel drei in seitlichem Abstand voneinander angeordnete, sich in Transportrichtung 14 über die Stapeleinrichtung 16 erstreckende Führungsschienen 24', 24", 24'" auf, in welchen unter Bildung des Haltemechanismus jeweils mehrere in Längsrichtung einen Abstand voneinander aufweisende Luftdüsen 26 angeordnet sind. Jede Gruppe der entlang der Führungsfläche 22 nebeneinander angeordneten Luftdüsen 26 sind über je ein Magnetventil 28 über eine Luftquelle 30 mit Druckluft beaufschlagbar (Fig. 3). Die Magnetventile 28 sind dabei über eine Steuereinrichtung 32 vorsteuerbar. Auf diese Weise sind die nach unten offenen Luftdüsen 26 von oben her mit Druckluft 34 beaufschlagbar. Die aus der Düse mit hoher Geschwindigkeit austretende Luft trifft nach unten unmittelbar nach der Düsenmündung 36 auf die vorbei geführte Tafel 10 auf und wird zur Seite hin unter Bildung eines Luftpolsters 38 umgelenkt. Wie die Strömungspfeile 38' zeigen, strömt die Luft zur Seite weg und drückt nicht mehr nach unten auf die Tafel 10. Andererseits wirkt der Umgebungsdruck 40 an der Unterseite 42 der Tafel 10 ungehindert auch nach oben, so dass die Tafel 10 entgegen der aus der Luftdüse 26 ausströmenden Luft gegen die Führungsfläche 22 angesaugt wird. Das Luftpolster 38 sorgt dafür, dass es zu keiner Anlage zwischen der Tafeloberfläche 44 und der Führungsfläche 22 kommt, so dass eine reibungsarme und zerstörungsfreie Verschiebung entlang der Führungsstrecke 24 möglich ist.

Eine weitere Besonderheit des gezeigten Ausführungsbeispiels besteht darin, dass gemäß Fig. 1c die äußeren Führungsschienen 24', 24'" höher als die innere Führungsschiene 24" angeordnet sind. Die Führungsschienen 24', 24", 24"' spannen somit gemeinsam eine in Querrichtung gekrümmte Führungsfläche 22 auf, die aufgrund der durch die Luftdüsen 26 ausgeübten Haltekräfte zu einer Aufschüsselung der aus einem biegsamem Material bestehenden Tafel 10 und damit zu deren Aussteifung führt. Auf diese Weise wird ein stabiles Führungsverhalten beim Vorbeiflug der Tafeln 10 im Bereich der Führungsfläche 22 erzielt. Ein ähnlicher Effekt kann auch dadurch erzielt werden, dass die äußeren Führungsschienen tiefer als die innere Führungsschiene angeordnet sind. Auch in diesem Fall würden die Führungsschienen gemeinsam eine in Querrichtung gekrümmte Führungsfläche aufspannen, die aufgrund der durch die Luftdüsen ausgeübten Haltekräfte zu einer Aufschüsselung der aus einem biegsamen Material bestehenden Tafel und damit zu deren Aussteifung führt. Es hat sich jedoch gezeigt, dass die erste Variante mit den höher liegenden äußeren Führungsschienen 24', 24'" zuverlässiger funktioniert. Um einen glatten Übergang zwischen der Tafelzuführstrecke und der Führungsstrecke zu gewährleisten, hat es sich als vorteilhaft erwiesen, wenn die Tafelzuführstrecke 12 zumindest im Bereich ihres der Stapeleinrichtung zugewandten Endes eine quer zur Transportrichtung gekrümmte Führungsfläche zur Aufschüsselung der an die Übergabeeinrichtung zu übergebenden Tafel aufweist.

Zum Ablegen einer Tafel 10 in der Stapeleinrichtung 16 werden die Magnetventile 26 kurz vor Erreichen der Ablegeposition 18 deaktiviert, so dass die Tafel 10 sich unter der Einwirkung der Schwerkraft nach unten bewegen und auf den Stapel fallen kann.

Die Stapeleinrichtung 16 weist außerdem einen mechanischen Anschlag 46 auf, der elastisch nachgiebig ist. Der Anschlag weist beispielsweise eine Metallfeder 48 auf, die sich geringfügig hin und her bewegen kann. Dadurch wird erreicht, dass die mit einer Restgeschwindigkeit ankommende Tafel 10 mit ihrer Vorderkante 10' auf den federnden Anschlag 46 trifft und durch diesen in der Ablegeposition abgelegt wird.

In der Tafelzuführstrecke 12 befindet sich ein als Lichtschranke ausgebildeter Sensor 50, der auf eine Position entlang des Transportwegs anspricht und sowohl den Einlauf der Tafel 10 im Bereich der Tafelvorderkante 10' als auch den Austritt der Tafel 10 zur Übergabeeinrichtung 20 im Bereich der Tafelhinterkante 10" überwacht.

In der Tafelzuführstrecke 12 befindet sich ferner ein in der Nähe der Übergabeeinrichtung 20 angeordneter Bremsmechanismus 52. Der Bremsmechanismus wird über die Steuereinrichtung 32 aktiviert, wenn über den Sensor 50 die vorbeilaufende Hinterkante 10" der Tafel 10 an die Steuereinrichtung 32 gemeldet wird. Der Bremsmechanismus 52 ist beispielsweise ein mechanisches System, das die Tafel 10 gegen das perforierte Zuführband 54 zieht und eine Bremswirkung ausübt, wenn gleichzeitig die Geschwindigkeit des Zuführbandes 54 reduziert wird.

Gleichzeitig oder kurz vor dem Einwirken des Bremsmechanismus 52 auf die Tafel 10 wird die Haltekraft über die Luftdüsen 26 im Bereich der Führungsfläche 22 reduziert oder abgeschaltet, so dass die Tafel 10 sich nach unten absenkt, auf den mechanischen Anschlag 46 trifft, und auf dem Stapel abgelegt wird. Die Transportgeschwindigkeit entlang der Führungsstrecke 24 wird dabei ausschließlich über das Zuführband 54 und dessen Bremsmechanismus 52 gesteuert. Das Zuführband 54 muss dabei nicht auf die Geschwindigkeit Null abgebremst werden. Die Restgeschwindigkeit wird vielmehr so gewählt, dass eine zuverlässige Abbremsung der Tafel 10 über den Anschlag 46 möglich ist, ohne dass es zu einer Tafelbeschädigung kommt. Ein wesentlicher Vorteil dieser Betriebsweise besteht darin, dass die Tafeln 10 mit hoher Taktfrequenz transportiert und auf dem Stapel abgelegt werden können, ohne dass eine Beschädigungsgefahr besteht.

Zusammenfassend ist folgendes festzuhalten: Die Erfindung bezieht sich auf eine Vorrichtung zum Transportieren und Ablegen von Tafeln 10 aus Metall, Kunststoff oder Pappe. Die Vorrichtung weist eine Tafelzuführstrecke 12, eine in Transportrichtung 14 an die Tafelzuführstrecke 12 anschließende Stapeleinrichtung 16 und eine oberhalb der Stapeleinrichtung 16 angeordnete Übergabeeinrichtung 20 auf. Die Übergabeeinrichtung 20 ist mit einem Haltemechanismus versehen, der die Tafel 10 unter Ausübung einer nach oben weisenden Haltekraft in Richtung Stapeleinrichtung 16 führt und dort auf einem Stapel 17 ablegt. Eine Besonderheit der Erfindung besteht darin, dass die Übergabeeinrichtung 20 eine sich in Transportrichtung 14 mit nach unten weisender stationärer Führungsfläche 22 über die Stapeleinrichtung 16 erstreckende Führungsstrecke 24 aufweist, in welcher unter Bildung des Haltemechanismus mehrere, einen Abstand voneinander aufweisende, jeweils im Bereich der Führungsfläche 22 nach unten offene Luftdüsen 26 angeordnet sind. Die Luftdüsen 26 sind über eine Steuereinrichtung 32 mit Druckluft beaufschlagbar und dazu geeignet, zwischen der Führungsfläche 22 und der ankommenden Tafel 10 ein von der Druckluft durchströmtes Luftpolster 38 zu erzeugen, über welches die Tafel 10 unter Ausnutzung des Bernoulli-Effekts gegen die Führungsfläche 22 angezogen wird.

### Bezugszeichenliste:

- 10: Tafel
- 10': Vorderkante
- 10": Tafelhinterkante
- 12: Tafelzuführstrecke
- 14: Transportrichtung
- 16: Stapeleinrichtung
- 18: Ablegeposition
- 20: Übergabeeinrichtung
- 22: Führungsfläche
- 24: Führungsstrecke
- 24', 24", 24"': Führungsschienen
- 26: Luftdüse
- 28: Magnetventil
- 30: Luftquelle
- 32: Steuereinrichtung
- 34: Druckluft
- 36: Düsenmündung
- 38: Luftpolster
- 40: Umgebungsdruck
- 42: Unterseite
- 44: Tafeloberfläche
- 46: Anschlag
- 48: Metallfeder
- 50: Sensor
- 52: Bremsmechanismus
- 54: Zuführband

## Patentansprüche

1. Vorrichtung zum Transportieren und Ablegen von Tafeln (10) aus Metall, Kunststoff oder Pappe, mit einer Tafelzuführstrecke (12), mit einer in Transportrichtung (14) an die Tafelzuführstrecke (12) anschließenden Stapeleinrichtung (16) und mit einer oberhalb der Stapeleinrichtung (16) angeordneten, eine von der Tafelzuführstrecke (12) ankommende Tafel (10) über Kopf übernehmenden und in einer Ablegeposition der Stapeleinrichtung (16) ablegenden Übergabeeinrichtung (20), wobei die Übergabeeinrichtung (20) einen Haltemechanismus aufweist, der die Tafel unter Ausübung einer über eine Steuereinrichtung (32) einstellbaren, nach oben weisenden Haltekraft in Richtung Stapeleinrichtung (16) führt und dort auf einem Stapel (17) ablegt, wobei die Übergabeeinrichtung (20) eine sich in Transportrichtung (14) mit nach unten weisender stationärer Führungsfläche (22) über die Stapeleinrichtung (16) erstreckende Führungsstrecke (24) aufweist, in welcher unter Bildung des Haltemechanismus mehrere, einen Abstand voneinander aufweisende, jeweils im Bereich der Führungsfläche (22) nach unten offene Luftdüsen (26) angeordnet sind, die mit Druckluft (34) beaufschlagbar und dazu geeignet sind, zwischen der Führungsfläche (22) und der ankommenden Tafel (10) ein von der Druckluft durchströmtes Luftpolster (38) zu erzeugen, **dadurch gekennzeichnet, dass** die Führungsstrecke (24) mindestens drei in seitlichem Abstand voneinander angeordnete, sich in Transportrichtung (14) über die Stapeleinrichtung (16) erstreckende Führungsschienen (24', 24", 24"') aufweist, in welchen jeweils mehrere in Längsrichtung (14) einen Abstand voneinander aufweisende Luftdüsen (26) angeordnet sind, und wobei die äußeren Führungsschienen (24', 24"') höher oder tiefer als die innere Führungsschiene (24") angeordnet sind und gemeinsam mit dieser eine in Querrichtung gekrümmte Führungsfläche (22) aufspannen.

2. Vorrichtung nach Anspruch 1, **dadurch gekennzeichnet, dass** die Luftdüsen (26) im Bereich der Übergabeeinrichtung (20) über Magnetventile (28) ansteuerbar sind, die einzeln oder gruppenweise über die Steuerungseinrichtung (32) vorsteuerbar sind.

3. Vorrichtung nach Anspruch 1 oder 2, **dadurch gekennzeichnet, dass** im Bereich der Tafelzuführstrecke (12) ein auf einen rückwärtigen Abschnitt der Tafel (10) einwirkender Bremsmechanismus (52) angeordnet ist, und dass ein auf eine Position der Tafel entlang ihres Transportwegs ansprechender Sensor (50) vorgesehen ist, der mit der Steuerungseinrichtung (32) zur Ansteuerung der Luftdüsen (26) gekoppelt ist.

4. Vorrichtung nach einem der Ansprüche 1 bis 3, **dadurch gekennzeichnet, dass** die Steuerungseinrichtung (32) durch Sperrung der Luftdüsen (26) einen Ablegevorgang auslöst, bevor die Tafel die Ablegeposition erreicht.

5. Vorrichtung nach einem der Ansprüche 1 bis 4, **dadurch gekennzeichnet, dass** im Bereich des in Transportrichtung (14) rückwärtigen Endes der Stapeleinrichtung (16) unterhalb der Führungsstrecke (24) ein mechanischer Anschlag (46) für die Vorderkante (10') der abzulegenden Tafel (10) angeordnet ist.

6. Vorrichtung nach Anspruch 5, **dadurch gekennzeichnet, dass** der Anschlag (46) federnd oder elastisch ausgebildet ist.

7. Vorrichtung nach einem der Ansprüche 1 bis 6, **dadurch gekennzeichnet, dass** die Tafelzuführstrecke (12) ein endlos umlaufendes Zuführband (54) umfasst, dessen Umlaufgeschwindigkeit variabel ist und über welches die Tafel unter Ausübung einer über die Steuerungseinrichtung (32) einstellbaren Haltekraft bei reduzierter Umlaufgeschwindigkeit auf eine Restgeschwindigkeit abbremsbar ist.

8. Vorrichtung nach Anspruch 7, **dadurch gekennzeichnet, dass** im Bereich des Zuführbandes (54) eine Unterdruckquelle oder Magnetquelle als Bremsmechanismus (52) angeordnet ist.

9. Vorrichtung nach einem der Ansprüche 1 bis 8, **dadurch gekennzeichnet, dass** im Bereich der Tafelzuführstrecke (12) ein auf die Vorderkante (10') und/oder die Rückkante (10") der ankommenden Tafel (10) ansprechender, mit der Steuerungseinrichtung (32) verbundener Sensor (50) angeordnet ist.

10. Vorrichtung nach einem der Ansprüche 1 bis 9, **dadurch gekennzeichnet, dass** die Tafelzuführstrecke (12) zumindest im Bereich ihres der Stapeleinrichtung (16) zugewandten Endes eine quer zur Transportrichtung gekrümmte Führungsfläche zur Aufschüsselung der an die Übergabeeinrichtung (20) zu übergebenden Tafel (10) aufweist.

## Claims

1. Device for transporting and depositing panels (10) made of metal, plastic or cardboard, having a panel feed section (12), having a stacking unit (16) following the panel feed section (12) in the transport direction (14), and having a transfer unit (20) arranged above the stacking unit (16), accepting a panel (10) arriving from the panel feed section (12) upside down and placing the same in a deposit position of the stacking unit (16), the transfer unit (20) having a holding mechanism which, whilst exerting a holding force that points upwards and is adjustable via a control unit (32), guides the panel in the direction of the stacking unit (16) and deposits it there on a stack (17), the transfer unit (20) having a guide section (24) extending in the transport direction (14) with a stationary guide surface (22) pointing downwards above the stacking unit (16), in which section, forming a holding mechanism, air nozzles (26) each open at the bottom are arranged at a distance from one another in the area of the guide surface (22), to which nozzles compressed air (34) can be applied and which are suitable to generate an air cushion (38) through which the compressed air flows between the guide surface (22) and the incoming panel (10), **characterized in that** the guide section (24) has at least three guide rails (24', 24", 24"') arranged at a lateral distance from one another and extending in the transport direction (14) over the stacking unit (16), in which a plurality of air nozzles (26) at a distance from one another in the longitudinal direction (14) are arranged, and wherein the outer guide rails (24', 24"') are arranged to be higher or lower than the inner guide rail (24") and, together with the latter, span a guide surface (22) that is curved in the transverse direction.

2. Device according to Claim 1, **characterized in that** the air nozzles (26) in the area of the transfer unit (20) can be activated via solenoid valves (28), which can be pre-controlled by the control unit (32) individually or in groups.

3. Device according to Claim 1 or 2, **characterized in that** in the area of the panel feed section (12) there is arranged a braking mechanism (52) acting on a rear section of the panel (10), and **in that** a sensor (50) responding to a position of the panel along its transport path is provided, being coupled to the control unit (32) for activating the air nozzles (26).

4. Device according to one of Claims 1 to 3, **characterized in that** the control unit (32) triggers a deposition operation by blocking the air nozzles (26) before the panel reaches the deposit position.

5. Device according to one of Claims 1 to 4, **characterized in that** a mechanical stop (46) for the leading edge (10') of the panel (10) to be deposited is arranged underneath the guide section (24) in the area of the rear end of the stacking unit (16) in the transport direction (14).

6. Device according to Claim 5, **characterized in that** the stop (46) is designed to be springy or elastic.

7. Device according to one of Claims 1 to 6, **characterized in that** the panel feed section (12) comprises an endlessly circulating feed belt (54), the speed of circulation of which is variable and via which the panel can be braked to a residual speed by exerting a holding force that is adjustable via the control unit (32) at a reduced speed of circulation.

8. Device according to Claim 7, **characterized in that** a vacuum source or magnetic source is arranged in the area of the feed belt (54) as a braking mechanism (52).

9. Device according to one of Claims 1 to 8, **characterized in that** a sensor (50) responding to the leading edge (10') and/or the trailing edge (10") of the incoming panel (10) and connected to the control unit (32) is arranged in the area of the panel feed section (12).

10. Device according to one of Claims 1 to 9, **characterized in that,** at least in the area of its end facing the stacking unit (16), the panel feed section (12) has a guide surface curved transversely with respect to the transport direction for dishing the panels (10) to be transferred to the transfer unit (20).

## Revendications

1. Dispositif de transport et de dépôt de panneaux (10) en métal, en plastique ou en carton, avec une section d'amenée des panneaux (12), avec un dispositif d'empilement (16) se raccordant à la section d'amenée des panneaux (12) dans la direction de transport (14) et avec un dispositif de transfert (20) agencé au-dessus du dispositif d'empilement (16), qui reprend par le haut un panneau (10) arrivant de la section d'amenée des panneaux (12) et le dépose dans une position de dépôt du dispositif d'empilement (16), dans lequel le dispositif de transfert (20) présente un mécanisme de retenue, qui guide le panneau en exerçant une force de retenue dirigée vers le haut en direction du dispositif d'empilement (16) et réglable par un dispositif de commande (32) et l'y dépose sur une pile (17), dans lequel le dispositif de transfert (20) présente une section de guidage (24) s'étendant dans la direction de transport (14) avec une face de guidage stationnaire (22) tournée vers le bas au-dessus du dispositif d'empilement (16), section dans laquelle plusieurs buses à air ouvertes vers le bas (26), présentant une distance l'une de l'autre, sont agencées respectivement dans la région de la face de guidage (22) en formant le mécanisme de retenue, qui peuvent être alimentées en air comprimé (34) et qui sont aptes à produire un coussin d'air (38) parcouru par l'air comprimé entre la face de guidage (22) et le panneau arrivant (10), **caractérisé en ce que** la section de guidage (24) présente au moins trois rails de guidage (24', 24", 24"') agencés à une distance latérale l'un de l'autre et s'étendant dans la direction de transport (14) sur le dispositif d'empilement (16), dans lesquels plusieurs buses à air (26) présentant une distance l'une de l'autre en direction longitudinale (14) sont respectivement agencées, et dans lequel les rails de guidage extérieurs (24', 24'") sont disposés plus haut ou plus bas que le rail de guidage intérieur (24") et définissent avec celui-ci une face de guidage (22) courbe en direction transversale.

2. Dispositif selon la revendication 1, **caractérisé en ce que** les buses à air (26) dans la région du dispositif de transfert (20) peuvent être commandées par des soupapes magnétiques (28), qui peuvent être commandées individuellement ou par groupes par le dispositif de commande (32).

3. Dispositif selon la revendication 1 ou 2, **caractérisé en ce qu'**un dispositif de frein (52) agissant sur une partie arrière du panneau (10) est disposé dans la région de la section d'amenée des panneaux (12), et **en ce qu'**il est prévu un capteur (50) réagissant à une position du panneau le long de son chemin de transport, qui est couplé avec le dispositif de commande (32) pour la commande des buses à air (26).

4. Dispositif selon l'une quelconque des revendications 1 à 3, **caractérisé en ce que** le dispositif de commande (32) déclenche une opération de dépôt en fermant les buses à air (26), avant que le panneau atteigne la position de dépôt.

5. Dispositif selon l'une quelconque des revendications 1 à 4, **caractérisé en ce qu'**une butée mécanique (46) pour le bord avant (10') du panneau à déposer (10) est agencée dans la région de l'extrémité arrière du dispositif d'empilement (16) dans la direction de transport (14), en dessous de la section de guidage (24).

6. Dispositif selon la revendication 5, **caractérisé en ce que** la butée (46) est à ressort ou est élastique.

7. Dispositif selon l'une quelconque des revendications 1 à 6, **caractérisé en ce que** la section d'amenée des panneaux (12) comprend une bande d'alimentation tournant sans fin (54), dont la vitesse de circulation est variable et par laquelle le panneau peut être freiné à une vitesse résiduelle en exerçant une force de retenue réglable par le dispositif de commande (32) à vitesse de circulation réduite.

8. Dispositif selon la revendication 7, **caractérisé en ce qu'**une source de dépression ou une source magnétique est agencée en tant que mécanisme de frein (52) dans la région de la bande d'alimentation (54).

9. Dispositif selon l'une quelconque des revendications 1 à 8, **caractérisé en ce qu'**un capteur (50) relié au dispositif de commande (32) et réagissant au bord avant (10') et/ou au bord arrière (10") du panneau arrivant (10) est agencé dans la région de la section d'amenée des panneaux (12).

10. Dispositif selon l'une quelconque des revendications 1 à 9, **caractérisé en ce que** la section d'arrivée des panneaux (12) présente, au moins dans la région de son extrémité tournée vers le dispositif d'empilement (16), une face de guidage courbe transversalement à la direction de transport pour la courbure du panneau (10) à transférer au dispositif de transfert (20).
